# EUROPEAN PATENT SPECIFICATION

(11) **EP 0 990 346 B1**
(45) Date of publication and mention of the grant of the patent: **15.10.2014**
(21) Application number: 99901848.4
(22) Date of filing: 15.02.1999
(51) Int. Cl.: H04N 21/235, H04N 21/258, H04N 21/435, H04N 21/438, H04N 21/442, H04N 21/45, H04N 21/454, H04N 21/475, H04N 21/6543, H04N 21/81, H04N 7/173

(54) **DIGITAL TELEVISION SYSTEM WHICH SWITCHES CHANNELS IN RESPONSE TO CONTROL DATA IN A TELEVISION SIGNAL**
DIGITALES FERNSEHSYSTEM MIT KANALWECHSEL AUFGRUND VON KONTROLLDATEN IN FERNSEHSIGNALEN
SYSTEME DE TELEVISION NUMERIQUE COMMUTANT LES CANAUX EN REACTION AUX DONNEES DE COMMANDE DANS UN SIGNAL DE TELEVISION

(30) Priority: 20.04.1998 US 62940
(43) Date of publication of application: 05.04.2000
(73) Proprietor: TP Vision Holding B.V., 1097 JB Amsterdam (NL)
(72) Inventor: SITNIK, Eran, NL-5656 AA Eindhoven (NL)
(74) Representative: Busch, Patrick
(86) International application number: PCT/IB1999/000260
(87) International publication number: WO 1999/055090

(56) References cited:
- WO-A2-95/28794
- US-A- 5 027 400
- US-A- 5 424 770
- INTERNATIONAL CONFERENCE ON INFORMATION AND KNOWLEDGE MANAGEMENT MICHAEL EHRMANTRAUT: 'The Personal Electronic Program Guide - Towards the Pre-selection of Individual TV Programs' 1996, ROCKVILLE,

## Description

### BACKGROUND OF THE INVENTION

### Field Of The Invention

The present invention is directed to a digital television system with remote channel switching capabilities. In particular, the invention is directed to a digital television system which automatically switches between channels based on control data transmitted along with a television signal over one of the channels.

### Description Of The Related Art

Limitations inherent in analog television systems necessitated transmitting information, such as advertisements, emergency broadcasts, etc., over the same frequency channel that regular television programming is transmitted. For example, in the case of emergency broadcasts, regular television programming on a particular channel is pre-empted in favor of the emergency broadcast. Advertisements, on the other hand, are sandwiched between the regular programming and then transmitted along with the regular programming.

While the foregoing system has been more or less universally accepted, the system has several flaws. For example, with respect to advertising, in conventional television systems each television station must perform various types of signal processing in order to add advertising at appropriate points within the station's regular programming. This signal processing, if performed incorrectly, can adversely affect the programming. Moreover, such advertising may not be effective from an economic standpoint, particularly in light of the recent fragmenting of consumer tastes. That is, because the same advertising is transmitted to all televisions within a viewing area, such advertising will not be able to take into account differences in the television audience. This problem is described further in the international patent application "Digital Television System Which Selects Images For Display In A Video Sequence", published as WO 99/55091.

With respect to emergency broadcasting, in conventional systems each station within an emergency broadcasting area will typically pre-empt its programming to include an emergency broadcast. However, with the widespread use of cable and satellite television systems, many viewers within the emergency broadcasting area will likely be watching television programs that do not originate from within the emergency broadcasting area. As a result, those viewers will not receive an emergency broadcast. Similarly, viewers outside the emergency broadcasting area who are watching a television channel originating from the emergency broadcasting area will receive an emergency broadcast unnecessarily. Thus, there exists a need for a television system which addresses flaws of conventional television systems, particularly those flaws relating to emergency broadcasts and television advertising described above.

United States patent application US 5,027,400 describes a multimedia bidirectional broadcast system including a broadcast station and subscriber terminals. The broadcast station includes a main control unit having therein a data base control table in which program and commercial download sequences are recorded depending on a setting effected by a subscriber, a program transmitter for effecting accesses and transmissions of transmission programs onto transmission lines based on the setting of the main control unit, a commercial transmitter for accessing a commercial data base and for transmitting content thereof based on the setting of the main control unit.

### SUMMARY OF THE INVENTION

The present invention addresses the foregoing need by providing a digital television system (e. g., a stand-alone digital television or a combination of a digital television and a settop box) which can be switched from a first channel to a second channel based on control data transmitted along with a television signal. Thus, in accordance with the invention, regular programming may be shown on the first channel, whereas advertising, emergency broadcasts, or the like may be shown on the second channel. By switching channels remotely based on control data, it is therefore possible to switch from the regular programming on the first channel to whatever is being shown on the second channel.

Thus, by virtue of the foregoing, the invention provides an alternative means for adding advertising to a television program. Moreover, since the television (or settop box) itself determines whether to switch channels, the invention provides a means for transmitting emergency broadcasts to appropriate viewers.

In preferred embodiments of the invention, a user profile containing information relating to a user of the digital television system is stored therein. In these embodiments, channels may be switched based also on the information in the user profile. Thus, in one representative embodiment, the invention may examine the user profile and, based on information in the user profile, switch the television to a channel showing television "commercials" which correspond to the information in the user profile. For example, if the user profile indicates that the household containing the digital television system includes pre-teen boys, at appropriate times the television may switch to a channel showing only advertisements for electronic games and similar products that appeal to pre-teen boys.

Thus, according to one aspect, the present invention is a digital television system which receives control data from a source and which uses the control data to switch channels on a digital television. The digital television system includes a memory which stores computer executable process steps and channel switching circuitry which is capable of receiving television signals transmitted over a plurality of different channels. At least one of the television signals is received over a first channel and includes control data relating to a second channel. A controller is also included in the digital television system, which receives the control data and which executes the process steps stored in the memory so as to control the channel switching circuitry in accordance with the control data to switch from the first channel to the second channel.

In preferred embodiments of the invention, the controller controls the channel switching circuitry to switch from the second channel back to the first channel after a predetermined period of time. In these embodiments, the control data specifies the predetermined period of time and identifies the second channel. In this manner, the invention provides a way in which to control the times at which the channels are switched and the durations for which the channels are switched.

In particularly preferred embodiments of the invention, the television system includes a memory which stores a user profile corresponding to the digital television, where the user profile contains information relating to a user of the digital television. This information can comprise user demographic information and/or information on television viewing habits of the user. In these embodiments, the controller controls the channel switching circuitry to switch from the first channel to the second channel also in accordance with the information in the user profile. By virtue of these features of the invention, it is possible to tailor advertising to particular users, thereby increasing the effectiveness of such advertising, and to provide emergency broadcasts to appropriate viewers.

According to another aspect, the present invention is a method of switching between channels of a digital television system having channel switching circuitry that is capable of receiving television signals transmitted over a plurality of different channels. The method includes receiving, at the channel switching circuitry, a first television signal over a first channel, where the first television signal includes control data relating to a second channel. The channel switching circuitry is then controlled in accordance with the control data to switch from the first channel to the second channel so that the channel switching circuitry receives a second television signal over the second channel.

According to still another aspect, the invention is a digital television system that includes a transmitter which transmits television signals over at least first and second channels, wherein a first television signal which is transmitted over the first channel includes control data relating to the second channel. Also included in the system is a digital television having channel switching circuitry that is capable of receiving the television signals transmitted over the first and second channels. In accordance with the invention, the digital television switches the channel switching circuitry from the first channel to the second channel based on the control data included in the first television signal so as to receive a second television signal over the second channel.

According to another aspect, the present invention is a transmitter for transmitting video data from a centralized location to one or more digital television systems. The video data defines a video sequence for display on a digital television, and includes control data identifying a channel on a digital television system and timing information specifying a time at which the digital television system is to switch to the channel and a duration of the switch.

This brief summary has been provided so that the nature of the invention may be understood quickly. A more complete understanding of the invention can be obtained by reference to the following detailed description of the preferred embodiments thereof in connection with the attached drawings.

### BRIEF DESCRIPTION OF THE DRAWINGS

Figure 1 shows a digital television system in which the present invention may be implemented.
Figure 2 shows a block diagram of the digital television shown in Figure 1.
Figure 3 is a flow diagram depicting operation of the digital television of Figure 2.

### DETAILED DESCRIPTION OF THE PREFERRED EMBODIMENT

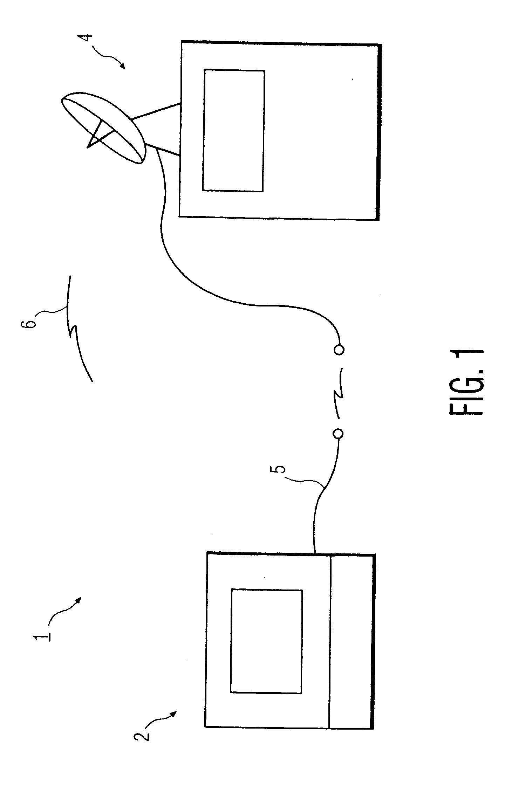

Figure 1 shows an example of a television transmission system in which the present invention may be implemented. As shown in Figure 1, television system 1 includes digital television 2, transmitter 4, and transmission medium 5. Transmission medium may be a coaxial cable, fiber-optic cable, or the like, over which television signals comprised of video data, audio data, and control data may be transmitted between transmitter 4 and digital television 2. As shown in Figure 1, transmission medium 5 may include a radio frequency (hereinafter "RF") link, or the like, between portions thereof. In addition, television signals may be transmitted between transmitter 4 and digital television 2 solely via an RF link, such as RF link 6.

Transmitter 4 is located at a centralized facility, such as a television station or studio, from which the television signals may be transmitted to users' digital televisions. In preferred embodiments of the invention, video and audio data in these signals is coded, preferably at the centralized facility, prior to transmission. A preferred coding method for the audio data is AC3 coding. A preferred coding method for the video data is Motion Picture Experts Group (hereinafter "MPEG") coding, and in particular MPEG-2 coding. It should be noted, however, that the invention can be implemented using other coding methods, such as DVB or the like.

The video data in the television signals comprises a video sequence, which may include one or more television programs and television advertising (i.e., commercials) interspersed among the television programs, while the audio data in the television signals comprises sound associated with corresponding portions of the video data. In accordance with the invention, the television signals transmitted from transmitter 4 also include control data which is used to control switching of channels on digital television 2. This control data may include, among other things, information identifying a television channel on digital television 2, together with timing information. As described in more detail below, using this information digital television 2 automatically switches channels to the channel identified in the control data at a time, and for a duration, specified by the timing information.

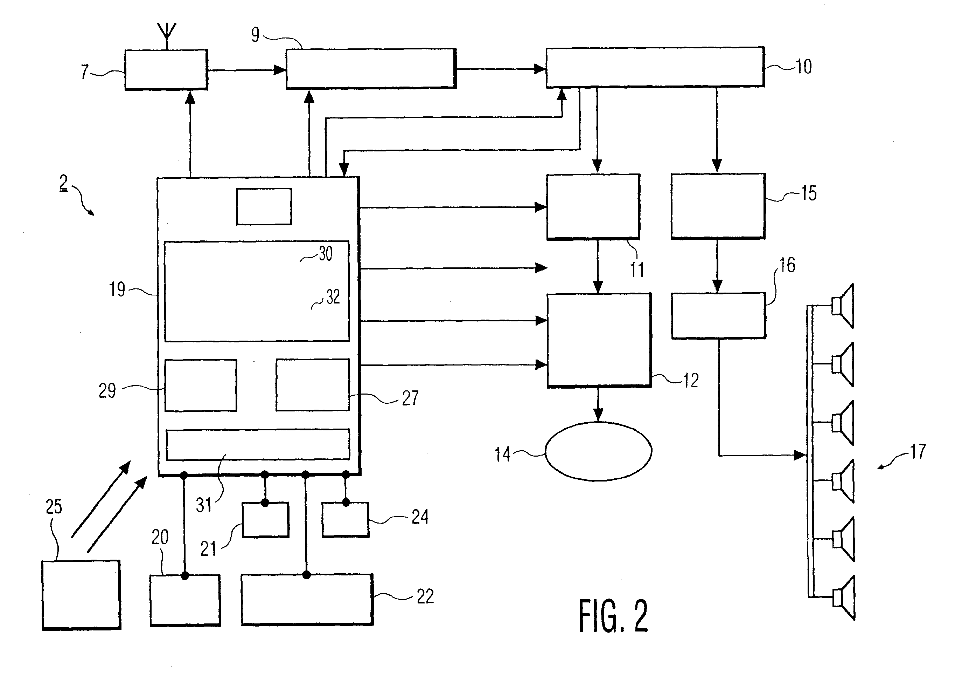

Figure 2 shows a block diagram of digital television 2. As shown in the figure, digital television 2 includes tuner 7, VSB demodulator 9, demultiplexer 10, video decoder 11, display processor 12, display screen 14, audio decoder 15, amplifier 16, speakers 17, central processing unit (hereinafter "CPU") 19, modem 20, random access memory (hereinafter "RAM") 21, non-volatile storage 22, read-only memory (hereinafter "ROM") 24, and input devices 25. Each of these features of digital television 2 is well-known to those of ordinary skill in the art; however, descriptions thereof are nevertheless provided herein for the sake of completeness.

In this regard, tuner 7 comprises a standard analog RF receiving device which is capable of receiving television signals from either transmission medium 5 or via RF link 6 over a over a plurality of different frequency channels, and of transmitting these received signals. Which channel tuner 7 receives a signal from is dependent upon control signals received from CPU 19. These control signals may correspond to the control data received along with the television signals, as described in more detail below. Alternatively, the control signals received from CPU 19 may correspond to data input via one or more of input devices 25. In this regard, input devices 25 can comprise any type of well-known television input device, such as a remote control, keyboard, knob, joystick, etc.

Demodulator 9 receives a television signal from tuner 7 and, based on control signals received from CPU 19, converts the television signal into, preferably, MPEG-2-coded digital data packets. These data packets are then output from demodulator 9 to demultiplexer 10, preferably at a high speed, such as 20 megabits per second. Demultiplexer 10 receives the data packets output from demodulator 9 and "desamples" the data packets, meaning that the packets are output either to video decoder 11, audio decoder 15, or CPU 19 depending upon an identified type of the packet. Specifically, CPU 19 identifies whether packets from demultiplexer include video data, audio data, or control data based on identification data stored in those packets, and causes the data packets to be output accordingly. That is, video data packets are output to video decoder 11, audio data packets are output to audio decoder 15, and control data packets (i.e., data packets containing control data used in switching television channels) are output to CPU 19.

In an alternative embodiment of the invention, the data packets are output from demodulator 9 directly to CPU 19. In this embodiment, CPU 19 performs the tasks of demultiplexer 10, thereby eliminating the need for demultiplexer 10. Specifically, in this embodiment, CPU 19, receives the data packets, desamples the data packets, and then outputs the data packets based on the type of data stored therein. That is, as was the case above, video data packets are output to video decoder 11 and audio data packets are output to audio decoder 15. In this embodiment, however, CPU 19 retains control data packets, rather than outputting those packets.

In the case that the data packets described above are coded using MPEG-2, the "physical", or frequency, channel over which the MPEG-2 bitstream is transmitted can contain several different programs. Each program within the MPEG-2 bitstream is typically referred to as a "logical" channel. Accordingly, in the invention described herein, switching channels can refer to switching demultiplexer 10 between logical channels in order to receive different programming and/or switching tuner 7 between different frequency channels. In this regard, in preferred embodiments of the invention, the alternative programming is transmitted as different logical channels within a single channel. However, the invention is not limited to this arrangement.

Video decoder 11 decodes video data packets received from demultiplexer 10 (or CPU 19) in accordance with control signals, such as timing signals and the like, received from CPU 19. In preferred embodiments of the invention video decoder 11 is an MPEG-2 decoder; however, any decoder may be used so long as the decoder is compatible with the type of coding used to code the video data. Decoded video data is then transmitted to display processor 12.

Display processor 12 can comprise a microprocessor, microcontroller, or the like, which is capable of forming images from video data and of outputting those images to display screen 14. In operation, display processor 12 outputs a video sequence in accordance with control signals received from CPU 19 based on the decoded video data received from video decoder 11 and based on graphics data received from CPU 19. More specifically, display processor 12 forms images from the decoded video data received from video decoder 11 and from the graphics data received from CPU 19, and inserts the images formed from the graphics data at appropriate points in the video sequence defined by the images formed from the decoded video data. Specifically, display processor 12 uses image attributes, chromakeying methods and region-object substituting methods in order to include (i.e., to superimpose) the graphics data in the data stream for the video sequence.

The graphics data described above may correspond to any number of different types of images, such as station logos or the like. Additionally, the graphics data may comprise alternative advertising or the like, such as that described in international patent application "Digital Television System Which Selects Images For Display In A Video Sequence", published as WO 99/55091.

Audio decoder 15 is used to decode audio data packets associated with video data displayed on display screen 14. In preferred embodiments of the invention, audio decoder 15 comprises anAC3 audio decoder; however, other types of audio decoders may be used in conjunction with the present invention depending, of course, on the type of coding used to code the audio data. As shown in Figure 2, audio decoder 15 operates in accordance with audio control signals received from CPU 19. These audio control signals include timing information and the like, and may include information for selectively outputting the audio data, as described in more detail below. Output from audio decoder 15 is provided to amplifier 16. Amplifier 16 comprises a conventional audio amplifier which adjusts an output audio signal in accordance with audio control signals relating to volume or the like input via input devices 25. Audio signals adjusted in this manner are then output via speakers 17. CPU 19 comprises one or more microprocessors, which are capable of executing stored program instructions (i.e., process steps) to control operations of digital television 2. These program instructions comprise parts of software modules (described below) which are stored in either an internal memory of CPU 19 or in ROM 24 (e.g., an EPROM), and which are executed out of RAM 21. These software modules may be updated via modem 20 and/or via the MPEG-2 bitstream. That is, CPU 19 receives data from modem 20 and/or in the MPEG-2 bitstream which may include, but is not limited to, software module updates, video data (e.g., graphics data or the like), audio data, and a user profile. A user profile comprises information relating to one or more viewers of digital television 2, and is used in the method of remotely switching channels described below. The user profile may be stored anywhere within digital television 2, but in preferred embodiments of the invention the user profile is stored in non-volatile storage 22. In this regard, non-volatile storage 22 may comprise a flash EPROM, NVRAM, or the like, which is capable of being reprogrammed with, e.g., a new user profile, as desired.

At this point, it is noted that the invention may be implemented either (i) in a digital television system, such as that shown in Figure 2, in which all control hardware is housed within digital television 2, or (ii) in a digital television system which includes both a digital television and a settop box. In the latter case, CPU 19 above, or its substantial equivalent, may be housed in the settop box, together with a memory that includes software modules executed thereby. In this case, the digital television is controlled based on control signals from the settop box, and will itself include one or more processors, such as display processor 12 described above, for performing necessary control functions as well as video and audio display functions. Thus, although the invention can be implemented using different hardware configurations, for the sake of brevity, the following assumes that the hardware and software resides in the digital television itself.

Figure 2 shows examples of software modules which are executable within CPU 19. As shown in Figure 2, these modules include control module 27, user interface module 29, application modules 30, and operating system module 31. Operating system module 31 controls execution of the various software modules running in CPU 19 and supports communication between these software modules. Operating system module 31 may also control data transfers between CPU 19 and various other components of digital television 2, such as ROM 24. User interface module 29 receives and processes data received from input devices 25, and causes CPU 19 to output control signals in accordance therewith. To this end, CPU 19 includes control module 27, which outputs such control signals together with other control signals, such as those described above, for controlling operation of the various components of digital television 2. CPU 19 may also execute software modules (not shown) to decode video and audio data received from the transmitter. In the case that CPU 19 has this capability, demultiplexer 10 provides the video and audio data packets noted above to CPU 19 which performs the functions of video decoder 11 and audio decoder 15. In this case, video decoder 11 and audio decoder 15 can be removed from the invention.

Application modules 30 comprise software modules for implementing various signal processing features available on digital television 2. Application modules 30 can include both manufacturer-installed, i.e., "built-in", applications and applications which are downloaded via modem 20 and/or the video data bitstream. Examples of well-known applications that may be included in digital television 2 are an electronic program guide ("ECG") module and a closed-captioning ("CC") module.

In the present invention, application modules 30 also includes channel switching module 32, which may be either a built-in or downloaded software module. In brief, channel switching module 32 comprises process steps which are executable by CPU 19 to control channel switching circuitry, such as tuner 7 or demultiplexer 10, to receive a first television signal over a first channel, where the first television signal includes control data relating to a second channel, and to control the channel switching circuitry in accordance with the control data and in accordance with information stored in a user profile to switch from the first channel to the second channel so that the channel switching circuitry receives a second television signal over the second channel. Channel switching module 32 also includes executable process steps to control the channel switching circuitry to switch from the second channel back to the first channel after a predetermined period of time so that the channel switching circuitry receives the first television signal over the first channel.

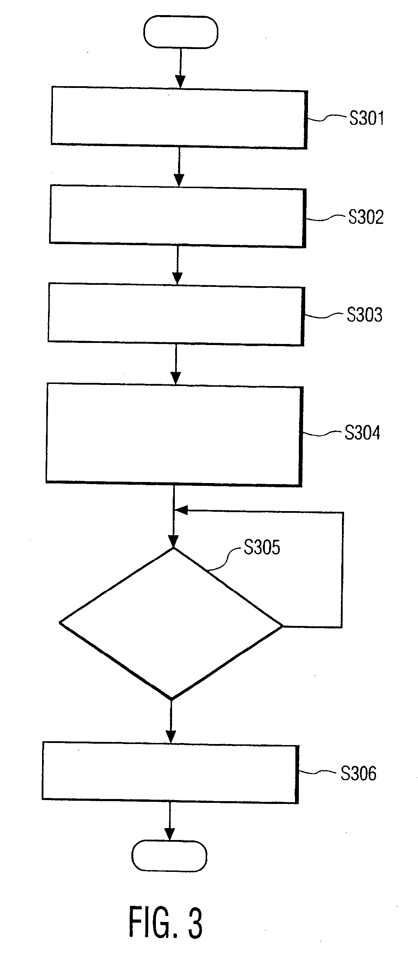

Figure 3 shows, in detail, processing performed by channel switching module 32. More specifically, in step S301, channel switching module 32 determines a user profile for digital television 2. In this regard, as noted above, the user profile comprises information specific to digital television 2 which is used during the remote channel switching system comprising the present invention. Information in the user profile may include a user's television viewing habits, such as which television programs that the user watches regularly, times of day that the user watches television, and commercials "zapped" (i.e., switched off), generic information, such as the user's zip code, telephone area code, neighborhood, and country; and user demographic information, such as the users' age, sex, yearly income, personal preferences, language, and personal habits. Any combination of the foregoing or any other relevant information may also be included within a user profile.

In some embodiments of the invention, different user profiles may be included in the digital television for different viewers. In these embodiments, the appropriate user profile may be selected by, e.g., inputting a code corresponding to a particular viewer when digital television 2 is turned on. For simplicity's sake, however, the invention described herein will assume one user profile for digital television 2.

In the present invention, the user profile may be determined in one or more different ways. For example, a viewer may fill out an on-screen questionnaire using an input device. The user profile may then be based upon the answers provided in the questionnaire. Alternatively, the user profile may be determined at an external location, i.e., outside of digital television 2, and then downloaded to digital television 2 via modem 20. As still another alternative, digital television 2 may itself compile the user profile. Specifically, CPU 19 may do this by monitoring programming displayed on digital television 2 over a predetermined period of time (e.g., one month) and, based thereon, determine a users' viewing habits, preferences, etc. Such information may then be stored as the user profile for digital television 2. Combinations of the foregoing methods may also be used to determine the user profile. For example, a user may manually edit a profile determined automatically by CPU 19; the user may request that the television "fill in" missing answers of a questionnaire; etc.

Following step S301, processing proceeds to step S302, in which the user profile is stored in a memory, such as non-volatile storage 22. Thereafter, step S303 receives, from demultiplexer 10, data packets containing control data used to switch channels on digital television 2. As noted above, this control data has been transmitted to digital television 2 along with a television signal from transmitter 4.

Next, step S304 controls channel switching circuitry (i.e., tuner 7 and/or demultiplexer 10) to switch channels on digital television 2 in accordance with the control data received from demultiplexer 10 and, in preferred embodiments of the invention, also in accordance with information stored in a user profile for digital television 2. In this regard, in step S304, data packets containing control data are decomposed by CPU 19. As described above, this control data comprises information identifying a television channel on digital television 2 (e.g., channel number, frequency, logical channel, etc.), together with timing information which indicates a time at which the channel switching circuitry is to switch to the identified television channel and the duration of the channel switch. Thus, in a case that the channel switching circuitry is receiving a first channel, in step S304, CPU 19 controls the channel switching circuitry to switch to a second channel based on the control data so that the television receives a second television signal over the second channel. This channel switch is made in accordance with the timing and duration information specified in the control data such that the channel switch occurs at a predetermined time and for a predetermined duration. In accordance with the invention, the first television signal on the first channel may comprise regular television programming, while the second television signal on the second channel may comprise advertising, announcements such as emergency broadcasts, etc.

In preferred embodiments of the invention, the channel switching described above is performed also in accordance with information stored in the user profile for digital television 2. In these embodiments, the control data transmitted along with a television signal may identify several different television channels, together with information relating to the programming on these channels. For example, these channels may include different types of programming, such as advertising directed to different audiences (e.g., toy commercials, women's clothing commercials, etc.), programming in different languages (e.g., Spanish, English, French, etc.), and programming (e.g., advertising and an emergency broadcasts) directed to a particular geographic location (e.g., Manhattan, New Jersey, etc.). Which channel digital television 2 switches to depends upon information in the user profile for digital television 2.

Thus, in these embodiments, step S304 decomposes a data packet containing the control data and examines information relating to the programming on each channel identified in the control data, where, as noted above, these channels can be frequency channels and/or logical channels. Specifically, this information is compared against corresponding information in a user profile for digital television 2. In a case that information corresponding to a particular television channel matches information in the user profile, step S304 switches to that channel. By way of example, CPU 19 may receive control data identifying two channels, one which delivers advertising in English and one which delivers advertising in Spanish, together with information identifying the channels accordingly. In this example, step S304 examines the information identifying each channel and compares this information to the user profile for digital television 2. In a case that the user profile for digital television 2 indicates that the user of digital television 2 is primarily English-speaking, step S304 switches to the channel identified in the control data as containing advertising in English. On the contrary, in a case that the user profile for digital television 2 indicates that the user of digital television 2 is primarily Spanish-speaking, step S304 switches to the channel identified in the control data as containing advertising in Spanish.

Of course, the invention can use more than one parameter in the user profile in order to control switching of television channels. For example, control data may include information on a channel containing Spanish-speaking advertising directed to children under the age of 13. In this case, step S304 examines the user profile for digital television 2 in order to determine if the user profile indicates that the user both is Spanish-speaking and has children under the age of 13. If this is the case, step S304 selects the channel containing Spanish-speaking advertising directed to children under the age of 13. Otherwise, another channel identified in the control data is selected. In this regard, if no information specified in the user profile matches a channel identified in the control data, digital television 2 may either (i) not switch channels or (ii) switch channels to a default channel which may either be specified in the control data, together with information identifying the channel as such, or prestored within a memory of digital television 2.

The invention can also be configured such that, rather than specifying channel numbers, frequencies, or logical channels in the control data, codes corresponding to a particular type of programming may instead be specified. For example, the control data may contain codes such as "Local-Ad-Channel" or "Spanish-Ad-Channel", which identify a type of programming on these channels (e.g., local advertising or Spanish-language advertising in the example provided). In this case, step S304 merely uses the codes to switch to the appropriate channel. Of course, in these embodiments, as in the embodiments described above, the control data includes information specifying times at which channels should be changed, together with a duration of the channel change.

Accordingly, following step S304, step S305 determines if the duration (e.g., a predetermined period of time) specified in the control data has elapsed after an initial channel switch from a first channel to a second channel. In a case that this predetermined period of time has not elapsed, processing continues in a loop around step S305, as shown in Figure 3. On the other hand, once the predetermined period of time has elapsed, processing proceeds to step S306. In step S306, CPU 19 controls the channel switching circuitry so that the channel switching circuitry switches from the channel specified in the control data (i.e., the second channel) back to the original channel (i.e., the first channel) that was being displayed prior to step S304. Thereafter, processing ends.

Of course, the foregoing process is repeated each time there is to be a channel switch, as specified in the control data transmitted over the first channel along with the first television signal. During the period that digital television 2 is switched to the second channel, several options are available regarding programming on the first channel. For example, that channel may go blank, in which case it is preferred that digital television 2 include control software to prevent a user from returning to the first channel prior to the duration specified in the control data. On the other hand, the first channel may display alternate advertising. For example, in this case, the first channel may contain advertising directed to males age 18 to 49, whereas the second channel specified in the control data may contain advertising directed to females of the same age. Whether digital television 2 remains on the first channel or switches to the second channel is dependent, in this case, on information in the user profile. In these cases, the user is preferably able to switch back to the first channel at will; although embodiments of the invention may be fashioned in which the user is prevented from making such channel switches.

Of course, those of ordinary skill in the art will recognize that the invention described herein is not limited to switching to television channels that include only advertising or emergency broadcasts, and that the invention may be used to switch to channels containing, e.g., entertainment or educational programming based on information stored in the user profile. For example, in accordance with the invention, alternative scenes (e.g., different endings) of a motion picture may be transmitted over different channels of the television system. The invention can then be used to select which channel, and thus which scene, should be displayed on the digital television at appropriate points during the motion picture. As was the case above, which scene the television system selects can be based on information in the user profile. In all cases, and in this case in particular, the channel switch is preferably seamless, meaning that it is virtually undetectable by a viewer of the digital television.

In this regard, in the case that a bitstream is encoded using MPEG-2, or other types of video compression coding, it takes up to two seconds from the beginning of a decoding operation until video/audio data from the coded bitstream is ready for output. In order to achieve a seamless (e.g., smooth) channel switch, control data indicating that channel switching should take place should be sent slightly in advance of the actual time that channels switching is to take place. By virtue of this arrangement, the digital television system is able to begin decoding video/audio data that is to be output in advance of the time that such data is to be output. As a result, the decoded data will be available for immediate output at the appropriate time, thereby resulting in a seamless presentation. Of course, implementation of seamless output will require additional operation of the decoder and demultiplexer and, in the case of a physical (as opposed to logical) channel switch, additional operation of the demodulator and the tuner.

In addition, operations similar to those described above should be performed before switching channels back to the original channel. That is, decoding of data to be output should be performed in advance of the actual time that such data is to be output, so that the data is ready for output at the appropriate time (i. e., at that channel switching time).

## Claims

1. A digital television system (2) which receives control data from a source and which uses the control data to switch channels on a digital television (2), the digital television system comprising:
a memory (24) which stores computer executable process steps;
channel switching circuitry (7, 10) which is capable of receiving television signals transmitted over a plurality of different channels, wherein at least one of the television signals is received over a first channel and includes control data relating to a second channel; and
a controller (19) which receives the control data and which executes the process steps stored in the memory (24) so as to control the channel switching circuitry (7, 10) in accordance with the control data to switch from the first channel to the second channel.

2. A digital television system according to Claim 1, wherein the controller (19) controls the channel switching circuitry (7, 10) to switch from the second channel back to the first channel after a predetermined period of time.

3. A digital television system according to Claim 2, wherein the control data specifies the predetermined period of time and identifies the second channel.

4. A digital television system according to any one of Claims 1 to 3, further comprising a memory (22) which stores a user profile corresponding to the digital television (2), the user profile containing information relating to a user of the digital television (2);
wherein the controller (19) controls the channel switching circuitry (7, 10) to switch from the first channel to the second channel also in accordance with the information in the user profile.

5. A digital television system according to Claim 4, wherein the information stored in the user profile comprises user demographic information.

6. A digital television system according to Claim 4 or 5, wherein the information stored in the user profile is based on television viewing habits of a user of the digital television (2).

7. A digital television system according to Claim 6, wherein the television viewing habits of the user are predetermined and then information corresponding thereto is stored in the user profile.

8. A digital television system according to Claim 6 or 7, wherein the controller (19) determines the television viewing habits of the user by monitoring programming displayed on the digital television (2) over a predetermined period of time.

9. A digital television system according to any one of Claims 1 to 8, wherein the memory (22, 24), channel switching circuitry (7, 10) and controller (19) are housed within the digital television (2).

10. A digital television system according to any one of Claims 1 to 8, wherein the controller (19) and the memory (22, 24) are housed within a settop box and the channel switching circuitry (7, 10) is housed within the digital television (2).

11. A method of switching between channels of a digital television system (2) having channel switching circuitry that is capable of receiving television signals transmitted over a plurality of different channels, the method comprising the steps of:
receiving (S303), at the channel switching circuitry (7, 10), a first television signal over a first channel, the first television signal including control data relating to a second channel; and
controlling (S304) the channel switching circuitry (7, 10) in accordance with the control data to switch from the first channel to the second channel so that the channel switching circuitry (7, 10) receives a second television signal over the second channel.

12. A digital television system comprising:
a transmitter (4) which transmits television signals over at least first and second channels, wherein a first television signal which is transmitted over the first channel includes control data relating to the second channel; and
a digital television (2) as claimed in one of the preceding claims.

13. A transmitter (4) for transmitting video data from a centralized location to one or more digital television systems (2) as claimed in one of the preceding claims, the video data defining a video sequence for display on the digital television (2), and including control data identifying a channel on the digital television system (2) and timing information specifying a time at which the digital television system (2) is to switch to the channel and a duration of the switch.

## Patentansprüche

1. Digitalfernsehsystem (2), das Steuerdaten aus einer Quelle empfängt und das die Steuerdaten verwendet, um Kanäle in einem Digitalfernseher (2) umzuschalten, wobei das Digitalfernsehsystem umfasst:
einen Speicher (24), der computerausführbare Prozessschritte speichert;
Kanalumschalt-Schaltkreise (7, 10), die in der Lage sind, Fernsehsignale zu empfangen, die über mehrere unterschiedliche Kanäle übertragen werden, wobei mindestens eines der Fernsehsignale über einen ersten Kanal empfangen wird und Steuerdaten enthält, die einen zweiten Kanal betreffen;
ein Steuergerät (19), das die Steuerdaten empfängt und das die Prozessschritte ausführt, die im Speicher (24) gespeichert sind, um die Kanalumschalt-Schaltkreise (7, 10) entsprechend den Steuerdaten so zu steuern, dass vom ersten Kanal auf den zweiten Kanal geschaltet wird.

2. Digitalfernsehsystem nach Anspruch 1, wobei das Steuergerät (19) die Kanalumschalt-Schaltkreise (7, 10) steuert, um nach einem vorgegebenen Zeitabschnitt von dem zweiten Kanal zurück auf den ersten Kanal zu schalten.

3. Digitalfernsehsystem nach Anspruch 2, wobei die Steuerdaten den vorgegebenen Zeitabschnitt und den zweiten Kanal bestimmen.

4. Digitalfernsehsystem nach einem der Ansprüche 1 bis 3, ferner mit einem Speicher (22), der ein Nutzerprofil speichert, das dem Digitalfernseher (2) zugeordnet ist, wobei das Nutzerprofil Informationen enthält, die einen Nutzer des Digitalfernsehers (2) betreffen,
wobei das Steuergerät (19) die Kanalumschalt-Schaltkreise (7, 10) steuert, um auch entsprechend den Informationen im Nutzerprofil aus dem ersten Kanal auf den zweiten Kanal umzuschalten.

5. Digitalfernsehsystem nach Anspruch 4, wobei die Informationen, die im Nutzerprofil gespeichert sind, nutzerdemografische Informationen umfassen.

6. Digitalfernsehsystem nach Anspruch 4 oder 5, wobei die Informationen, die im Nutzerprofil gespeichert sind, auf den Fernsehgewohnheiten eines Nutzers des Digitalfernsehers (2) beruhen.

7. Digitalfernsehsystem nach Anspruch 6, wobei die Fernsehgewohnheiten des Nutzers im Voraus bestimmt werden und dann dazugehörige Informationen im Nutzerprofil gespeichert werden.

8. Digitalfernsehsystem nach Anspruch 6 oder 7, wobei das Steuergerät (19) die Fernsehgewohnheiten des Nutzers bestimmt, indem die auf dem Digitalfernseher (2) ausgegebenen Programme über einen vorgegebenen Zeitabschnitt hinweg registriert werden.

9. Digitalfernsehsystem nach einem der Ansprüche 1 bis 8, wobei der Speicher (22, 24), die Kanalumschalt-Schaltkreise (7, 10) und das Steuergerät (19) im Digitalfernseher (2) untergebracht sind.

10. Digitalfernsehsystem nach einem der Ansprüche 1 bis 8, wobei das Steuergerät (19) und der Speicher (22, 24) in einer Set-Top-Box untergebracht sind und die Kanalumschalt-Schaltkreise (7, 10) im Digitalfernseher (2) untergebracht sind.

11. Verfahren zum Umschalten zwischen Kanälen eines Digitalfernsehsystems (2), das Kanalumschalt-Schaltkreise aufweist, die in der Lage sind, Fernsehsignale zu empfangen, die über mehrere unterschiedliche Kanäle übertragen werden, wobei das Verfahren die Schritte umfasst zum:
Empfangen (S303) eines ersten Fernsehsignals an den Kanalumschalt-Schaltkreisen (7, 10) über einen ersten Kanal, wobei das erste Fernsehsignal Steuerdaten enthält, die einen zweiten Kanal betreffen; und
Steuern (S304) der Kanalumschalt-Schaltkreise (7, 10) entsprechend den Steuerdaten, um von dem ersten Kanal auf den zweiten Kanal zu schalten, sodass die Kanalumschalt-Schaltkreise (7, 10) ein zweites Fernsehsignal über den zweiten Kanal empfangen.

12. Digitalfernsehsystem mit:
einem Sender (4), der Fernsehsignale mindestens über einen ersten und zweiten Kanal überträgt, wobei ein erstes Fernsehsignal, das über den ersten Kanal übertragen wird, Steuerdaten enthält, die den zweiten Kanal betreffen; und
einem Digitalfernseher (2) nach einem der vorhergehenden Ansprüche.

13. Sender (4) zum Übertragen von einem zentralen Aufstellungsort aus an ein oder mehrere Digitalfernsehsysteme (2) nach einem der vorhergehenden Ansprüche, wobei die Videodaten eine Videosequenz zur Anzeige auf dem Digitalfernseher (2) festlegen und Steuerdaten enthalten, die einen Kanal auf dem Digitalfernsehsystem (2) und Zeitsteuerungsinformationen kennzeichnen, die einen Zeitpunkt, zu dem das Digitalfernsehsystem (2) auf den Kanal zu schalten ist, und eine Zeitdauer der Schaltung festlegen.

## Revendications

1. Système de télévision numérique (2) qui reçoit des données de commande en provenance d'une source et qui utilise les données de commande pour commuter des canaux sur un téléviseur numérique (2), le système de télévision numérique comprenant :
une mémoire (24) qui mémorise des étapes de processus exécutables par ordinateur ;
une circuiterie de commutation de canaux (7, 10) qui est capable de recevoir des signaux de télévision transmis sur une pluralité de canaux différents, dans lequel au moins l'un des signaux de télévision est reçu sur un premier canal et comprend des données de commande relatives à un deuxième canal ; et
un organe de commande (19) qui reçoit les données de commande et qui exécute les étapes de processus mémorisées dans la mémoire (24) de manière à commander la circuiterie de commutation de canaux (7, 10) en fonction des données de commande pour commuter du premier canal au deuxième canal.

2. Système de télévision numérique selon la revendication 1, dans lequel l'organe de commande (19) commande à la circuiterie de commutation de canaux (7, 10) de commuter du deuxième canal au premier canal après une période de temps prédéterminée.

3. Système de télévision numérique selon la revendication 2, dans lequel les données de commande spécifient la période de temps prédéterminée et identifient le deuxième canal.

4. Système de télévision numérique selon l'une quelconque des revendications 1 à 3, comprenant en outre une mémoire (22) qui mémorise un profil d'utilisateur correspondant au téléviseur numérique (2), le profil d'utilisateur contenant des informations relatives à un utilisateur du téléviseur numérique (2) ;
dans lequel l'organe de commande (19) commande à la circuiterie de commutation de canaux (7, 10) de commuter du premier canal au deuxième canal également en fonction des informations dans le profil d'utilisateur.

5. Système de télévision numérique selon la revendication 4, dans lequel les informations mémorisées dans le profil d'utilisateur comprennent des informations démographiques d'utilisateur.

6. Système de télévision numérique selon la revendication 4 ou 5, dans lequel les informations mémorisées dans le profil d'utilisateur sont basées sur des habitudes de visualisation de télévision d'un utilisateur du téléviseur numérique (2).

7. Système de télévision numérique selon la revendication 6, dans lequel les habitudes de visualisation de télévision de l'utilisateur sont prédéterminées puis des informations correspondant à celles-ci sont mémorisées dans le profil d'utilisateur.

8. Système de télévision numérique selon la revendication 6 ou 7, dans lequel l'organe de commande (19) détermine les habitudes de visualisation de télévision de l'utilisateur en surveillant la programmation affichée sur le téléviseur numérique (2) au cours d'une période de temps prédéterminée.

9. Système de télévision numérique selon l'une quelconque des revendications 1 à 8, dans lequel la mémoire (22, 24), la circuiterie de commutation de canaux (7, 10) et l'organe de commande (19) sont logés à l'intérieur du téléviseur numérique (2).

10. Système de télévision numérique selon l'une quelconque des revendications 1 à 8, dans lequel l'organe de commande (19) et la mémoire (22, 24) sont logés à l'intérieur d'un terminal et la circuiterie de commutation de canaux (7, 10) est logée à l' intérieur du téléviseur numérique (2).

11. Procédé de commutation entre des canaux d'un système de télévision numérique (2) ayant une circuiterie de commutation de canaux qui est capable de recevoir des signaux de télévision transmis sur une pluralité de canaux différents, le procédé comprenant les étapes de :
la réception (S303), à la circuiterie de commutation de canaux (7, 10), d'un premier signal de télévision sur un premier canal, le premier signal de télévision comprenant des données de commande relatives à un deuxième canal ; et
la commande (S304) de la circuiterie de commutation de canaux (7, 10) en fonction des données de commande pour commuter du premier canal au deuxième canal de sorte que la circuiterie de commutation de canaux (7, 10) reçoive un deuxième signal de télévision sur le deuxième canal.

12. Système de télévision numérique comprenant :
un émetteur (4) qui transmet des signaux de télévision sur au moins un premier canal et un deuxième canal, dans lequel un premier signal de télévision qui est transmis sur le premier canal comprend des données de commande relatives au deuxième canal ; et
un téléviseur numérique (2) selon l'une des revendications précédentes.

13. Emetteur (4) pour transmettre des données vidéo d'un emplacement centralisé à un ou plusieurs systèmes de télévision numérique (2) selon l'une des revendications précédentes, les données vidéo définissant une séquence vidéo à afficher sur le téléviseur numérique (2), et comprenant des données de commande identifiant un canal sur le système de télévision numérique (2) et des informations de timing spécifiant un moment auquel le système de télévision numérique (2) doit commuter sur le canal et une durée de la commutation.
